# EUROPEAN PATENT APPLICATION

(11) **EP 1 753 150 A1**
(43) Date of publication of application: **14.02.2007**
(21) Application number: 04822177.4
(22) Date of filing: 19.11.2004
(51) Int. Cl.: H04B 1/707

(54) **CDMA COMMUNICATION APPARATUS AND CDMA COMMUNICATION METHOD**

(30) Priority: 10.06.2004 JP 2004172996
(71) Applicant: MATSUSHITA ELECTRIC INDUSTRIAL CO., LTD., Kadoma-shi, Osaka 571-8501 (JP)
(72) Inventor: FUJITA, Shoichi c/o Matsushita El.In.Co.Ltd., Chuo-ku, Osaka-shi, Osaka 540-6319 (JP); NIHEI, Takao c/o Matsushita El.Ind.Co.Ltd., Chuo-ku, Osaka-shi, Osaka 540-6319 (JP)
(74) Representative: Grünecker, Kinkeldey, Stockmair & Schwanhäusser Anwaltssozietät
(86) International application number: PCT/JP2004/017286
(87) International publication number: WO 2005/122421

(57) **Abstract**

A CDMA communication apparatus wherein resistance against phase noise can be improved without degradation of transmission efficiency. In this apparatus, spread parts (110-1 to 110-n) spread the respective ones of transmission signals (1 to n). Coordinate transformation parts (120-1 to 120-n) interchange the in-phase and quadrature components of the signals as spread for each chip. A multiplexing part (130) multiplexes the n signals as coordinate transformed with known signals used for transmission path compensation. Coordinate transformation parts (250-1 to 250-n) interchange, for each chip, the in-phase and quadrature components of serial signals as outputted from a P/S conversion part (240) such that the coordinate transformations of the coordinate transformation parts (120-1 to 120-n) at the transmission end are reversed. Despread parts (260-1 to 260-n) despread the n signals as coordinate transformed by the coordinate transformation parts (250-1 to 250-n) to output reception signals (1 to n).

## Description

### Technical Field

The present invention relates to a code division multiple access (CDMA) communication apparatus and a CDMA communication method.

### Background Art

In digital mobile communication systems, an OFDM-CDMA scheme combining an orthogonal frequency division multiplexing (OFDM) scheme and a CDMA scheme, is adopted as one of the CDMA communication that transmits and receives data using a plurality of carriers.

A communication apparatus using the conventional OFDM-CDMA scheme receives a signal and performs fast Fourier transform (FFT) processing on the received signal and time-frequency conversion. Then, the apparatus estimates a frequency response of transmission path for each subcarrier using known pilot symbols included in the received signal and performs transmission path compensation for information symbols in a transmission frame using the estimated value.

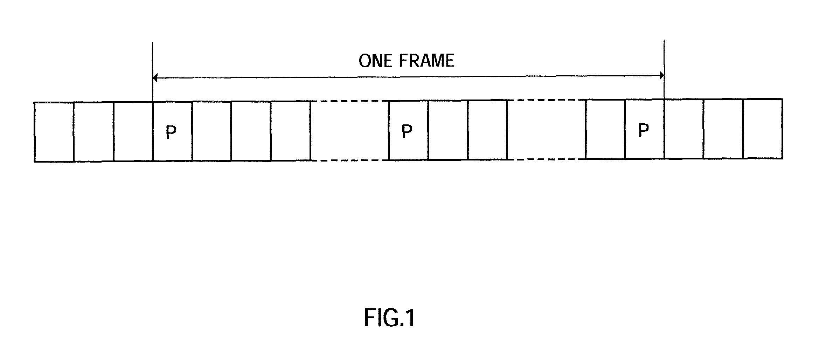

In order to perform transmission path compensation of the information symbols as described above, at least one pilot symbol is inserted in every frame. Transmission path compensation compensates the amplitude and phase fluctuation of the transmission path at the time the pilot symbols is transmitted. In digital mobile communication where the state of the transmission path changes, it is possible to perform more precise transmission path compensation when the intervals in which the pilot symbols are inserted are shorter. Accordingly, for example, as shown in FIG. 1, a plurality of pilot symbols as indicated by "P" in the figure are inserted in every frame.

However, the pilot symbols are different from the information symbols and are known symbols without information to be transmitted. Therefore, the transmission efficiency decreases in accordance with an increase of the inserted pilot symbols.

Generally, communication apparatuses for use in digital mobile communication systems perform frequency conversion processing between baseband and radio frequency band on signals transmitted and received via an antenna. At this time, a synthesizer generating frequency adds phase noise to the signals. Generally, phase noise has fast time fluctuation, and for example, fluctuates for each symbol. When the communication apparatus performs transmission path compensation on the received signals, by performing compensation including not only amplitude and phase fluctuation but also phase noise, it is possible to improve the reception performance.

In order to compensate phase noise having fast time fluctuation such as fluctuation for each symbol, it is necessary to insert many pilot symbols in every frame, and therefore the transmission efficiency decreases as described above.

As a method for suppressing performance deterioration due to phase noise, there is a method, for example, as disclosed in Patent Document 1. In this method, the transmission side performs code division multiplexing on the information signal and the known pilot signal to be used to detect residual phase errors, inverse fast Fourier transform (IFFT) processing and time-frequency conversion, and transmits the result. The receiving side performs fast Fourier transform (FFT) processing on the received signal and time-frequency conversion, and, after transmission path compensation, extracts the above-described code-division-multiplexed known pilot signal through despreading processing, detects residual phase errors from the known pilot signal, and performs phase compensation on the information signal using the detected phase errors. The known pilot signal for detecting code-division-multiplexed residual phase errors is a time-series signal, so that phase error detection is possible for each symbol. Therefore, according to the method disclosed in Patent Document 1, it is possible to respond to fast time fluctuation, such as the above-described phase noise, in which the response changes for each symbol.
Patent Document 1: Japanese Patent Application Laid-Open No.2001-144724

### Disclosure of Invention

### Problems to be Solved by the Invention

However, in the above-described conventional method, it is necessary to perform code division multiplexing of the known pilot signal in addition to the information signal, and therefore there is a problem that the transmission efficiency decreases. That is, the known pilot signal is subjected to code division multiplexing only for detecting residual phase errors, and does not include information to be communicated like the pilot symbols. Accordingly, a method for performing code division multiplexing on the information signal and known pilot signal incurs decreasing of the transmission efficiency. This problem occurs as well in single-carrier CDMA using only a single carrier. When many known signals such as pilot symbols are transmitted to remove phase noise, the transmission efficiency decreases.

It is therefore an object of the present invention to provide a CDMA communication apparatus and CDMA communication method capable of improving resistance to phase noise without decreasing transmission efficiency.

### Means for Solving the Problem

A CDMA communication apparatus of the present invention has: a spreading section that spreads a symbol using a spreading code to obtain a plurality of chips; and a conversion section that converts at least one of an in-phase (I) component and a quadrature (Q) component of half of the plurality of chips corresponding to one symbol.

A CDMA communication apparatus of the present invention has: a reception section that receives a signal including a plurality of chips obtained by spreading a symbol; a conversion section that converts at least one of the in-phase (I) component and the quadrature (Q) component of half of the plurality of chips corresponding to one symbol; and a despreading section that despreads the plurality of chips corresponding to the symbol using the spreading code.

A CDMA communication method of the present invention has the steps of: spreading a symbol using a spreading code to obtain a plurality of chips; and converting at least one of an in-phase (I) component and a quadrature (Q) component of half of the plurality of chips corresponding to one symbol.

A CDMA communication method of the present invention has the steps of: receiving a signal including a plurality of chips obtained by spreading a symbol; converting at least one of the in-phase (I) component and the quadrature (Q) component of half of the plurality of chips corresponding to one symbol; and despreading a plurality of chips corresponding to the symbol using the spreading code.

### Advantageous Effect of the Invention

According to the present invention, it is possible to improve resistance to phase noise without decreasing transmission efficiency.

### Brief Description of Drawings

FIG.1 shows an example of a frame configuration including pilot symbols;
FIG.2 is a block diagram showing a configuration of a CDMA communication apparatus according to Embodiment 1 of the present invention;
FIG.3 shows an internal configuration of a coordinate transformation section according to Embodiment 1 of the present invention;
FIG.4 shows an example of a symbol position of a transmission signal on the IQ plane;
FIG.5 shows states of the transmission signal after spreading and coordinate transformation according to Embodiment 1 of the present invention;
FIG.6 shows states of a received signal according to Embodiment 1 of the present invention;
FIG.7 shows states of a received signal after spreading and coordinate transformation according to Embodiment 1 of the present invention;
FIG.8 shows an example of fluctuation of symbol positions due to phase noise;
FIG.9 shows an example of fluctuation of symbol positions due to phase noise according to Embodiment 1 of the present invention;
FIG.10 shows an internal configuration of a coordinate transformation section according to Embodiment 2 of the present invention;
FIG.11 shows an example of a symbol position of the transmission signal on the IQ plane;
FIG. 12 shows states of the transmission signal after spreading and coordinate transformation according to Embodiment 2 of the present invention;
FIG. 13 shows states of the received signal according to Embodiment 2 of the present invention;
FIG.14 shows states of the received signal after spreading and coordinate transformation according to Embodiment 2 of the present invention;
FIG.15 is a block diagram showing a configuration of the CDMA communication apparatus according to Embodiment 3 of the present invention;
FIG.16 shows an internal configuration of a spreading section according to Embodiment 3 of the present invention;
FIG.17 is a block diagram showing a configuration of the CDMA communication apparatus according to Embodiment 4 of the present invention;
FIG.18 shows states of the received signal upon reception according to Embodiment 4 of the present invention;
FIG.19 shows states of the received signal after spreading and coordinate transformation according to Embodiment 4 of the present invention;
FIG.20A shows an example of the conventional received constellation; and
FIG.20B shows an example of a received constellation according to Embodiment 4 of the present invention.

### Best Mode for Carrying Out the Invention

Now, embodiments of the present invention will be described in detail with reference to the drawings.

### (Embodiment 1)

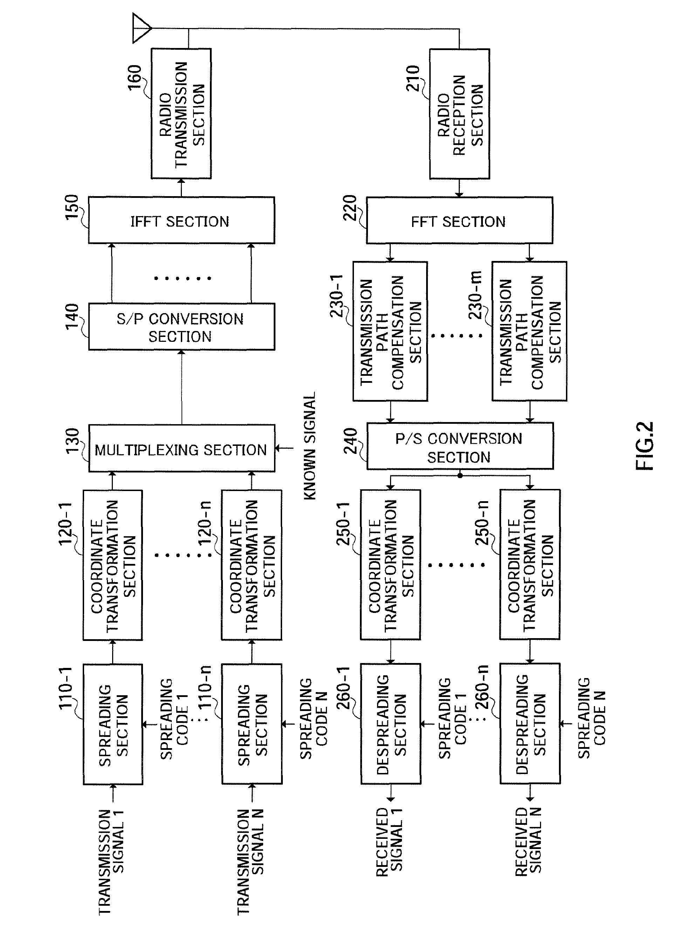

FIG.2 is a block diagram showing a configuration of the CDMA communication apparatus according to Embodiment 1 of the present invention. The CDMA communication apparatus shown in FIG.2 is mainly divided into transmission side and receiving side.

The transmission side includes spreading sections 110-1 through 110-n, coordinate transformation sections 120-1 through 120-n, multiplexing section 130, serial/parallel (S/P) conversion section 140, inverse fast Fourier transform (IFFT) section 150 and radio transmission section 160. The receiving side includes radio reception section 210, fast Fourier transform (FFT) section 220, transmission path compensation sections 230-1 through 230-m, parallel/serial (P/S) conversion section 240, coordinate transformation sections 250-1 through 250-n and despreading sections 260-1 through 260-n.

Spreading sections 110-1 through 110-n multiply corresponding spreading codes 1-n by transmission signals 1-n respectively and perform spreading processing. This spreading processing includes processing for the case of superimposing the same signal on all subcarriers configuring an OFDM signal. In this case, spreading sections 110-1 through 110-n multiply spreading codes (1, 1, ..., 1) (where the spreading factor is equal to the number of subcarriers) by transmission signals 1-n.

Coordinate transformation sections 120-1 through 120-n transform coordinates on the IQ plane of the signals after spreading processing according to a predetermined rule. More specifically, coordinate transformation sections 120-1 through 120-n exchange the in-phase component (hereinafter referred to as "I component") and the quadrature component (hereinafter referred to as "Q component") for each chip. Details about coordinate transformation of coordinate transformation sections 120-1 through 120-n will be described later.

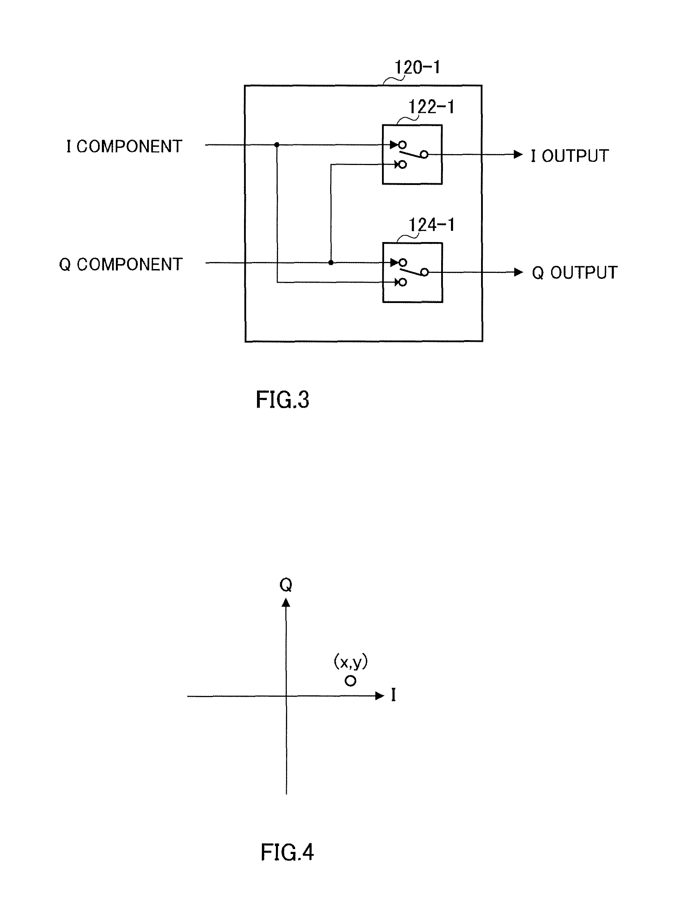

FIG.3 shows an internal configuration of coordinate transformation section 120-1. Coordinate transformation section 120-1 includes switch 122-1 and switch 124-1 as shown in FIG.3. In addition, coordinate transformation sections 120-2 through 120-n have the same configurations.

Switch 122-1 switches for each chip, exchanges the I component and the Q component after spreading processing outputted from spreading section 110-1 for each chip, and outputs the result as I output.

Switch 124-1 switches for each chip, exchanges the Q component and the I component after spreading processing outputted from spreading section 110-1 for each chip, and outputs the result as Q output.

Switches 122-1 and 124-1 switch in synchronization with each other, and, when one switch outputs the I component, the other switch outputs the Q component. More specifically, when switch 122-1 outputs the I component of a given chip and switch 124-1 outputs the Q component of the chip, switch 122-1 outputs the Q component of the next chip and switch 124-1 outputs the I component. Switching of switch 122-1 and switch 124-1 is performed at an accurate chip timing by, for example, receiving a switch signal from outside. When the switch signal is used, connection of switch 122-1 and switch 124-1 returns to an initial state upon processing of the first chip of each transmission frame.

Now, back to FIG.2., Multiplexing section 130 multiplexes n signals outputted from coordinate transformation sections 120-1 through 120-n and the known signal for transmission path compensation. Multiplexing section 130 multiplexes one known signal per frame. Accordingly, it is possible to minimize the decrease of the transmission efficiency due to the known signal.

S/P conversion section 140 performs S/P conversion on the signals outputted from multiplexing section 130 and outputs m parallel signals to be superimposed on m subcarriers.

IFFT section 150 performs IFFT processing on m parallel signals outputted from S/P conversion section 140, superimposes the results on the subcarriers and outputs OFDM signals.

Radio transmission section 160 performs predetermined radio transmission processing (such as D/A conversion and up-conversion) on the OFDM signals outputted from IFFT section 150 and transmits the results via the antenna.

Radio reception section 210 receives the OFDM signals via the antenna, performs predetermined radio reception processing (such as down-conversion and A /D conversion) on the received OFDM signals.

FFT section 220 performs FFT processing on the signals outputted from radio reception section 210 and outputs m subcarrier signals.

Transmission path compensation section 230-1 through 230-m perform transmission path compensation on m subcarrier signals using the known signal superimposed on each subcarrier.

P/S conversion section 240 performs P/S conversion of m signals outputted from transmission path compensation sections 230-1 through 230-m and outputs serial signals.

Coordinate transformation sections 250-1 through 250-n transform coordinates on the IQ plane of the serial signals outputted from P/S conversion section 240 according to a predetermined rules. More specifically, coordinate transformation sections 250-1 through 250-n exchange the I component and the Q component for each chip so as to restore the original state before coordinate transformation by coordinate transformation sections 120-1 through 120-n on the transmission side. In short, coordinate transformation sections 250-1 through 250-n have the same configurations to the above-described coordinate transformation sections 120-1 through 120-n.

Despreading sections 260-1 through 260-n multiply n signals after coordinate transformation outputted from coordinate transformation sections 250-1 through 250-n by corresponding spreading codes 1-n respectively, perform despreading processing, and output received signals 1-n.

Next, operation of the CDMA communication apparatus having the above-described configuration will be described in detail with reference to FIGs.4 through 7. In the following explanation, the number of code division multiplexing is 1 (that is, n=1), the spreading factor is 4, and spreading code 1 is (1, 1, -1, -1).

FIG.4 shows a coordinate position on the IQ plane of the symbol (x, y) of transmission signal 1 . This symbol (x, y) is spread by multiplying spreading code 1 at spreading section 110-1. Spreading code 1 = (1, 1, -1, -1) as described above, and therefore the symbol (x, y) is spread into four chips of chip 1 (x, y), chip 2 (x, y), chip 3 (-x, -y) and chip 4 (-x, -y).

Coordinate transformation section 120-1 performs coordinate transformation on these four chips. More specifically, switch 122-1 outputs x, which is the I component of chip 1, as the I output, and, at the same time, switch 124-1 outputs y, which is the Q component of chip 1 as the Q output.
Then, switch 122-1 and switch 124-1 switch. Switch 122-1 outputs y, which is the Q component of chip 2, as the I output, and, at the same time, switch 124-1 outputs x, which is the I component of chip 2, as the Q output.

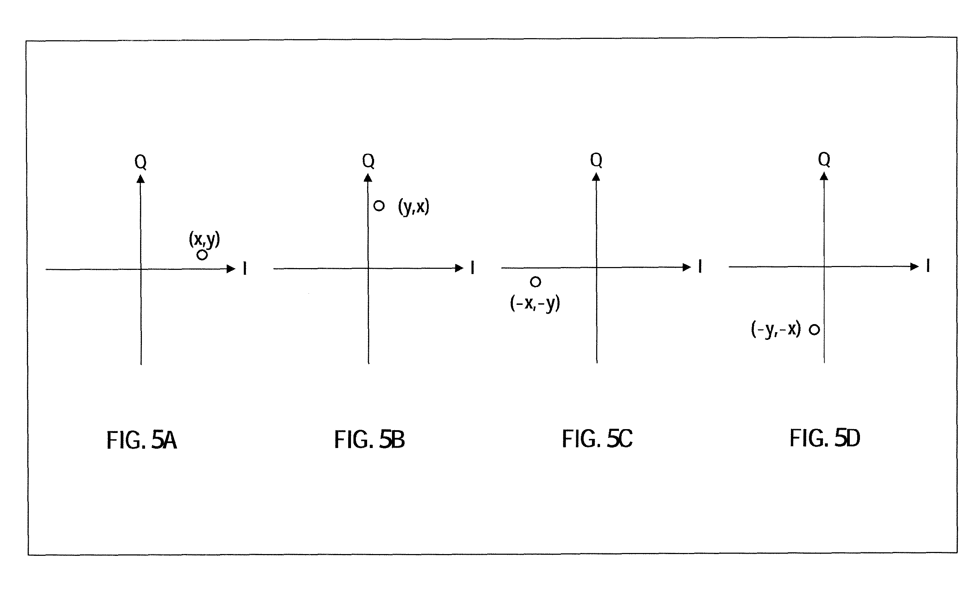

Switch 122-1 and switch 124-1 switch for each chip and output the I output and Q output. As a result, as shown in FIGs. 5A through 5D, the chips are subjected to coordinate transformation, to (x, y), (y, x) (-x, -y) and (-y, -x).

These chips after coordinate transformation are multiplexed with the known signals for transmission path compensation for each frame by multiplexing section 130 and subjected to S/P conversion to four parallel signals by S/P conversion section 140. Then, IFFT section 150 superimposes the four parallel signals on four subcarriers respectively and generate an OFDM signal. Radio transmission section 160 performs radio transmission processing on the OFDM signal and transmits the result via the antenna.

At this time, as radio transmission processing for the OFDM signal, frequency conversion (up-conversion) to increase the frequency from baseband to radio frequency band is performed. The frequency conversion is performed using a synthesizer which generates a desired frequency. Phases of the subcarriers (here, four subcarriers) included in the OFDM signal change with the same amount due to phase noise of this synthesizer.

Radio reception section 210 receives the transmitted signal via the antenna of the CDMA communication apparatus on the receiving side. Radio reception section 210 performs reception processing on the received signal. At this time, phase noise due to frequency conversion (down-conversion) from radio frequency band to baseband is added as with the transmission side. Phase noise added at radio transmission section 160 and radio reception section 210 includes a component with fast fluctuation, so that it is not possible to perform compensation using one known signal in one frame.

The signals after radio reception processing are subjected to FFT processing by FFT section 220, and four subcarrier signals are outputted to transmission path compensation sections 230-1 through 230-4. Transmission path compensation sections 230-1 through 230-4 perform transmission path compensation using the known signal included in the signal of each subcarrier.

As described above, only one single known signal is multiplexed in one frame so that amplitude fluctuation and phase fluctuation due to fading with relatively slow fluctuation are compensated by transmission path compensation sections 230-1 through 230-4. However, the phase fluctuation due to phase noise with fast fluctuation cannot be compensated by transmission path compensation sections 230-1 through 230-4.

Accordingly, the signal for each subcarrier, in which only the amplitude fluctuation and phase fluctuation on the transmission path are compensated, is outputted from transmission path compensation sections 230-1 through 230-4 and subjected to P/S conversion by P/S conversion section 240. The serial signals obtained by P/S conversion are inputted to coordinate transformation section 250-1.

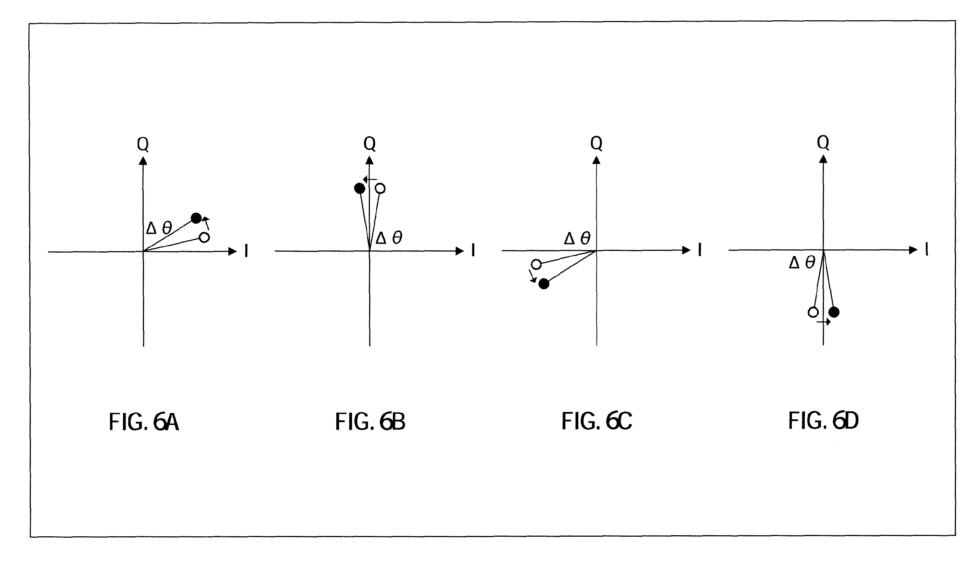

At this time, the chips after coordinate transformation shown in FIGs.5A through 5D are inputted to coordinate transformation section 250-1 at a state where positions are shifted to filled circles shown in FIGs. 6A through 6D. This is because, as a result of phase noise of frequency conversion at radio transmission section 160 and radio reception section 210 being added, the phases of the subcarriers fluctuate by Δθ.

Coordinate transformation section 250-1 performs coordinate transformation on the coordinates of filled circles shown in FIGs.6A through 6D so as to restore the original state before the coordinate transformation by coordinate transformation section 220-1. More specifically, the filled circle shown in FIG.6A is outputted as is. The filled circle shown in FIG.6B is outputted so that the I component and the Q component are exchanged. The filled circle shown in FIG.6C is outputted as is. The filled circle shown in FIG.6D is outputted so that the I component and the Q component are exchanged.

As described above, coordinate transformation section 250-1 has the same configuration to coordinate transformation section 120-1 and implements the coordinate transformation by the switch that switches for each chip timing.

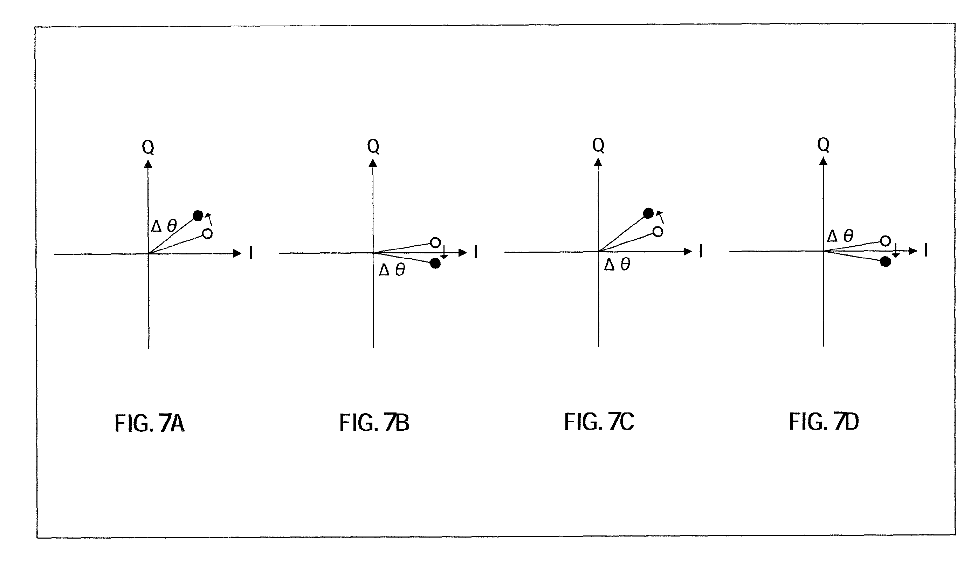

Despreading section 260-1 multiplies the four chips after coordinate transformation by spreading code 1 (1, 1, -1, -1) and performs despreading. More specifically, the chips are shifted to the filled circles shown in FIGs.7A through 7D, added, and outputted as received signal 1.

It is worth noting that coordinate transformation is performed so that the I component is exchanged with Q component every other chip, and therefore addition of the phase fluctuation shown in FIGs.7A through 7D makes zero by canceling out each other. More specifically, in FIGs.7A through 7D, although the open circles shift to filled circles by phase fluctuation by Δθ due to phase noise, coordinate transformation is performed before phase noise is added. Therefore, the directions of phase fluctuation due to phase noise are opposite between the chips corresponding to FIGs.7A and 7C and the chips corresponding to FIGs.7B and 7D, and the fluctuation cancels out each other.

Accordingly, in received signal 1 outputted from despreading section 260-1, phase fluctuation due to phase noise that cannot be compensated by transmission path compensation sections 230-1 through 230-4 is compensated. The known signal is not used for compensation of the phase fluctuation due to phase noise, so that the transmission efficiency does not decrease. Further, impacts of phase noise are eliminated, so that it is not necessary to provide a high-performance synthesizer at radio transmission section 160 and radio reception section 210, and it is possible to reduce the costs of the apparatus.

As described above, coordinate transformation sections 120-1 through 120-n and coordinate transformation sections 250-1 through 250-n according to Embodiment 1 of the present invention perform coordinate transformation with simple configurations using only switches, so that a circuit scale does not substantially increase due to coordinate transformation.
In other words, in this embodiment of the present invention, it is possible to eliminate impacts of phase noise effectively with a small circuit scale.

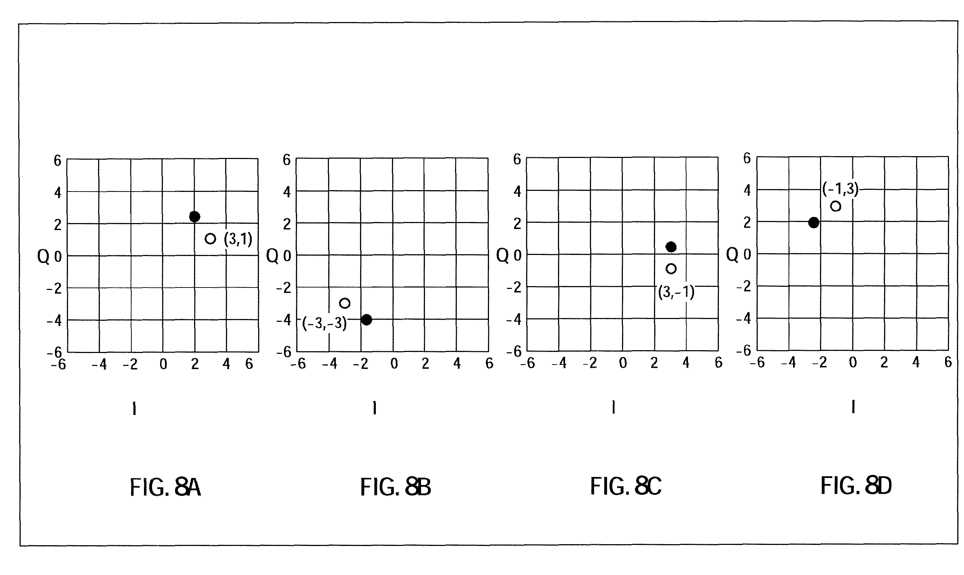

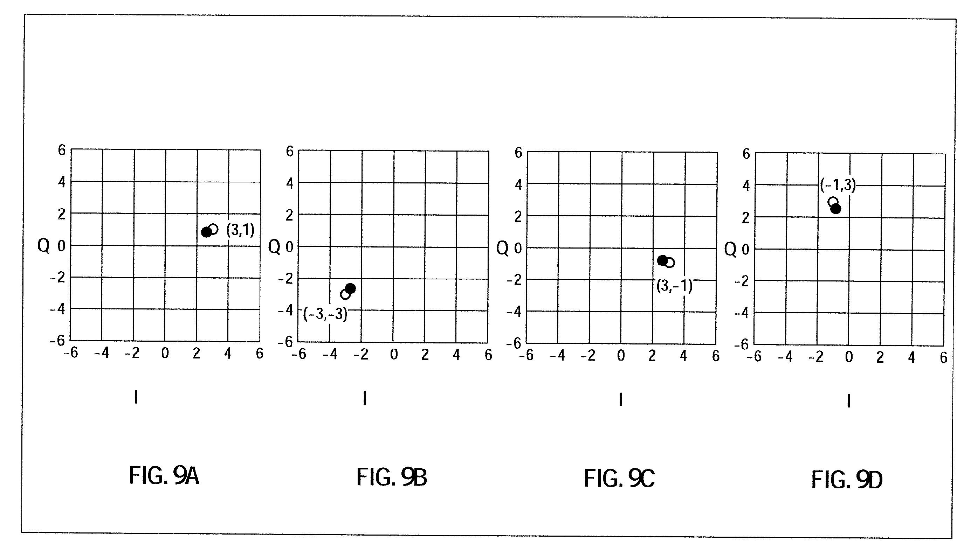

Next, the advantages of the phase noise elimination by the CDMA communication apparatus according to Embodiment 1 of the present invention will be described with reference to FIGs.8 and 9.

FIG.8 shows symbol positions of the transmission signal before spreading and symbol positions of the received signal after despreading in the conventional CDMA communication apparatus on the condition that the number of code division multiplexing is 4, the spreading factor is 8, and phase fluctuation due to phase noise is 30 degrees.

FIG.8A shows fluctuation of symbol positions of a signal spread and despread by spreading code 1 (1, 1, 1, 1,-1, -1,-1, -1). FIG. 8B shows fluctuation of symbol positions of a signal spread and despread by spreading code 2 (1, -1, -1, 1, 1, -1, -1, 1). FIG.8C shows fluctuation of symbol positions of a signal spread and despread by spreading code 3 (1, -1, 1, -1, 1, -1, 1, -1). FIG.8D shows fluctuation of symbol positions of a signal spread and despread by spreading code 4 (1, 1, -1, -1, -1, -1, 1, 1) . In FIGs . 8A through 8D, open circles indicate the symbol positions of the transmission signal before spreading, and filled circles indicate the symbol positions of the received signal after despreading.

FIG.9 shows the symbol positions of the transmission signal before spreading and the symbol positions of the received signal after despreading in the CDMA communication apparatus according to Embodiment 1 of the present invention on the same condition as FIG.8.

As is obvious from FIGs.8 and 9, in the conventional CDMA communication apparatus, impacts of phase noise appear in the received signals, and, as a result, symbol errors occur. In the CDMA communication apparatus according to Embodiment 1 of the present invention, little phase fluctuation due to phase noise appears, so that good reception is possible.

According to Embodiment 1 of the present invention, the transmission side exchanges the I component and Q component of the spread transmission signal for each chip, superimposes the signal on a plurality of subcarriers, and transmits the result. The receiving side restores the original state before exchanging the I component and Q component of the received signal and performs despreading, so that the phase fluctuation due to phase noise occurring upon frequency conversion cancels out, and it is therefore possible to eliminate impacts of phase noise that cannot be compensated only by transmission path compensation using the known signal because of fast fluctuation and improve resistance to phase noise without decreasing transmission efficiency.

### (Embodiment 2)

Features of Embodiment 2 of the present invention include inverting only one of the I component and Q component of the transmission signals after spreading for each chip.

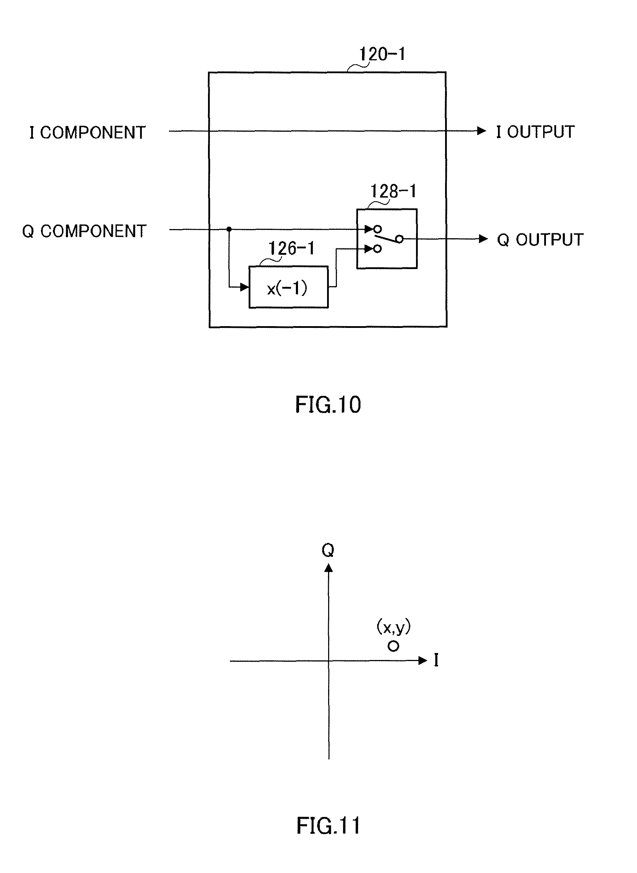

The configuration of the CDMA communication apparatus according to Embodiment 2 of the present invention is the same as the CDMA communication apparatus according to Embodiment 1 of the present invention (FIG.2), and therefore the description will be omitted. However, the internal configuration of coordinate transformation section 120-1 is different from Embodiment 1 and is as shown in FIG.10. As shown in FIG.10, coordinate transformation section 120-1 includes inverter 126-1 and switch 128-1. Coordinate transformation sections 120-2 through 120-n and coordinate transformation sections 250-1 through 250-n have the same configurations.

Inverter 126-1 inverts the sign of the Q component after spreading processing outputted from spreading section 110-1.

Switch 128-1 switches for each chip and outputs the Q component outputted from spreading section 110-1 or the Q component outputted from inverter 126-1 as the Q output.

Coordinate transformation section 120-1 outputs the I component outputted from spreading section 110-1 as the I output as is. With respect to the Q component, switch 128-1 switches for each chip, and thereby inverts the sign for each chip and outputs the result. Switching of switch 128-1 is performed at an accurate chip timing by, for example, receiving a switch signal from outside. When the switch signal is used, the connection of switch 128-1 is returned to the initial state upon processing of the first chip in each transmission frame.

Next, operation of the CDMA communication apparatus having the above-described configuration will be described using a specific example with reference to FIGs.11 through 14. In the following explanation, the number of code division multiplexing is 1 (that is, n=1), the spreading factor is 4, and spreading code 1 is (1, 1, -1, -1).

FIG. 11 shows a coordinate position on the IQ plane of a symbol (x, y) of transmission signal 1. Spreading section 110-1 multiplies this symbol (x, y) by spreading code 1. As described above, spreading code 1 = (1, 1, -1, -1). Therefore, the symbol (x, y) is spread into four chips of chip 1 (x, y), chip 2 (x, y), chip 3 (-x, -y) and chip 4 (-x, -y).

Coordinate transformation section 120-1 performs coordinate transformation on these four chips. More specifically, x, which is the I component of chip 1, is outputted as the I output as is, and, at the same time, y, which is the Q component of chip 1, is outputted as the Q output from switch 128-1. Then, switch 128-1 switches. Then, x, which is the I component of chip 2, is outputted as the I output as is, and, at the same time, the sign of y is inverted by inverter 126-1, and -y is outputted as the Q output from switch 128-1.

Similarly, switch 128-1 switches for each chip and outputs the I output and the Q output. As a result, as shown in FIGs . 12A through 12D, the chips are subjected to coordinate transformation to (x, y), (x, -y), (-x, -y) and (-x, y).

As described in Embodiment 1, chips after coordinate transformation are superimposed on four subcarriers, and an OFDM signal is generated. Radio transmission section 160 adds phase noise and transmits the result via the antenna.

The transmitted signals are received at radio reception section 210 via the antenna of the CDMA communication apparatus on the receiving side, and, as with Embodiment 1, subjected to FFT processing, and subjected to transmission path compensation using the known signal for each subcarrier.

The signal after transmission path compensation is subjected to P/S conversion by P/S conversion section 240, and the obtained serial signal is inputted to coordinate transformation section 250-1.

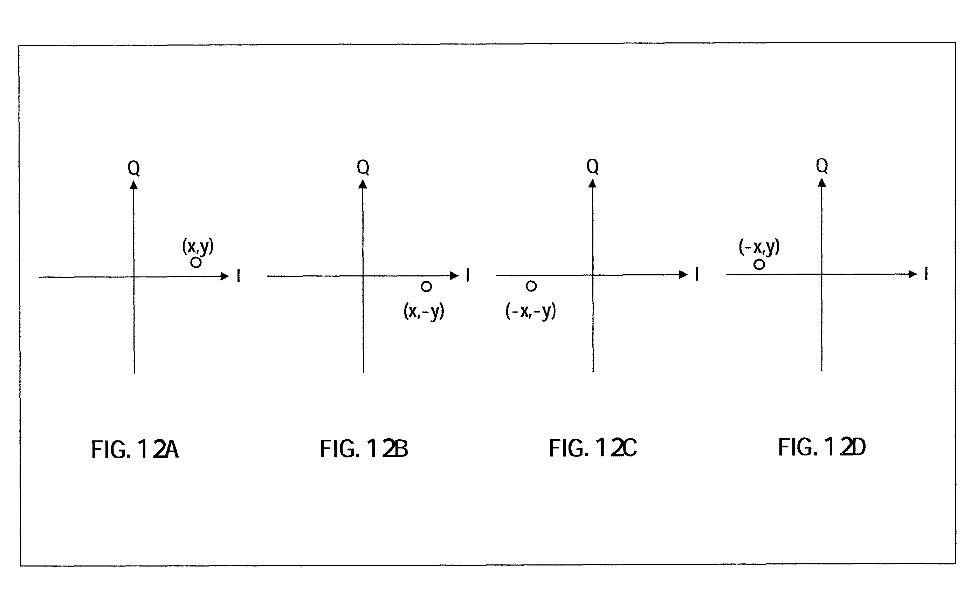

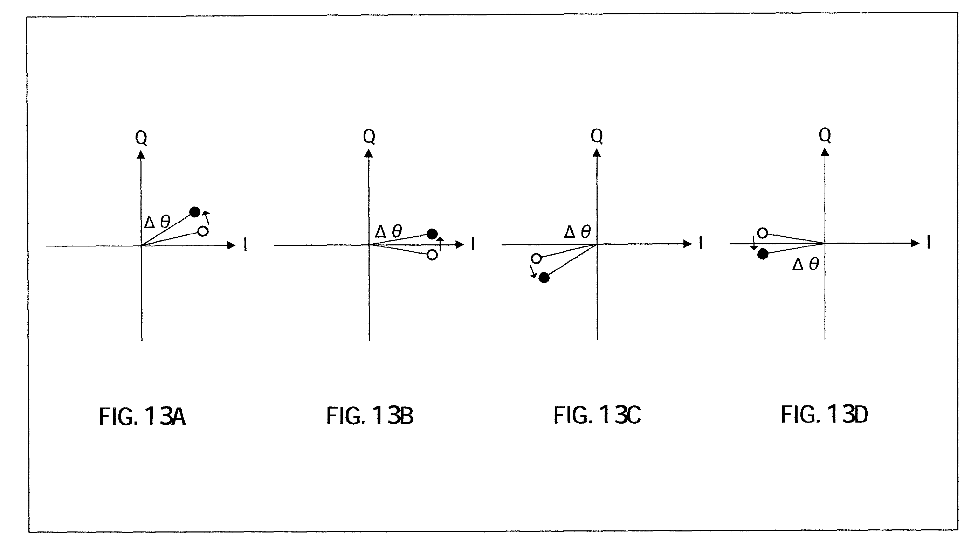

At this time, the chips after coordinate transformation shown in FIGs. 12A through 12D are inputted to coordinate transformation section 250-1 at a state shifted to filled circles shown in FIGs.13A through 13D. This is because, as a result of phase noise due to the frequency conversion at radio transmission section 160 and radio reception section 210 being added, phases of the subcarriers fluctuate by Δθ.

These filled circles shown in FIGs.13A through 13D are subjected to coordinate transformation by coordinate transformation section 250-1 so as to restore the original state before coordinate transformation of coordinate transformation section 120-1. More specifically, the filled circle shown in FIG.13A is outputted as is. The filled circle shown in FIG.13B is outputted with only the Q component inverted. The filled circle shown in FIG.13C is outputted as is. The filled circle shown in FIG.13D is outputted with only the Q component inverted.

As described above, coordinate transformation section 250-1 has the same configuration to coordinate transformation section 120-1 and implements the coordinate transformation by the inverters and switches that switch for each chip timing.

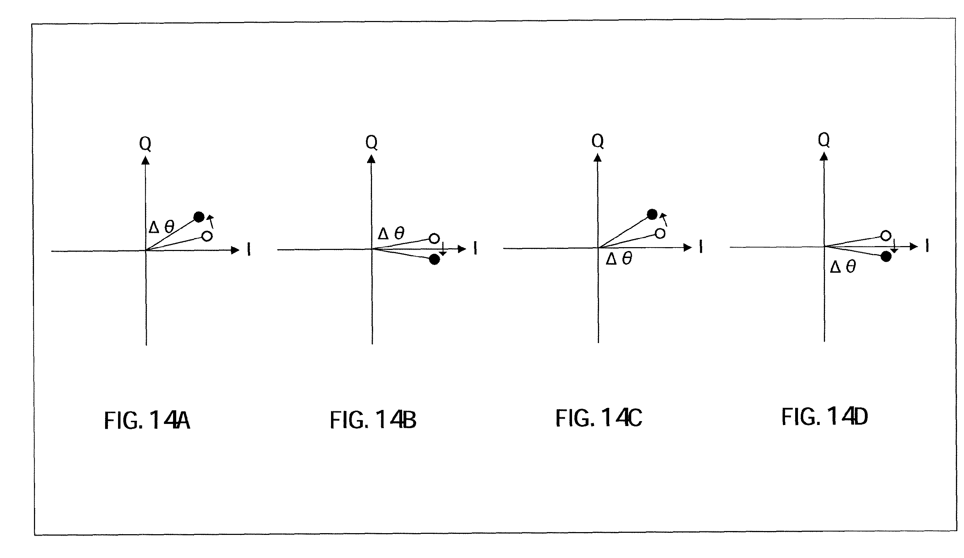

Despreading section 260-1 multiplies the four coordinate-transformed chips by spreading code 1 (1, 1, -1,-1) and performs despreading. More specifically, the chips move to filled circles shown in FIGs.14A through 14D, added, and outputted as received signal 1.

It is worth noting that coordinate transformation is performed so as to invert the sign of the Q component every other chip, and therefore addition of the phase fluctuation shown in FIGs.14A through 14D makes zero by canceling out each other. That is, in FIGs.14A through 14D, although the open circles move to the filled circles by phase fluctuation by Δθ due to phase noise, coordinate transformation is performed before phase noise is added. Therefore, the directions of phase fluctuation due to phase noise are opposite between the chips corresponding to FIGs . 14A and 14C and the chips corresponding to FIGs.14B and 14D, and the fluctuation cancels out each other.

Accordingly, in received signal 1 outputted from despreading section 260-1, phase fluctuation due to phase noise that cannot be compensated by transmission path compensation sections 230-1 through 230-4 is compensated. The known signal is not used for compensation of phase fluctuation due to phase noise, so that the transmission efficiency does not decrease. Further, impacts of phase noise are eliminated, so that it is not necessary to provide a high-performance synthesizer at radio transmission section 160 and radio reception section 210, and it is possible to reduce the costs of the apparatus.

As described above, coordinate transformation sections 120-1 through 120-n and coordinate transformation sections 250-1 through 250-n according to Embodiment 2 of the present invention perform coordinate transformation with a simple configuration using only an inverter and switches, so that a circuit scale does not substantially increase due to coordinate transformation. In other words, in this embodiment, it is possible to eliminate impacts of phase noise effectively with a small circuit scale.

According to Embodiment 2 of the present invention, the transmission side inverts the sign of the Q component of the spread transmission signal every other chip, superimposes the signal on a plurality of subcarriers and transmits the result. The receiving side inverts the sign of the Q component of the received signal every other chip and performs despreading, and therefore the phase fluctuation due to phase noise occurring upon the frequency conversion is canceled out, so that it is possible to eliminate impacts of phase noise that cannot be compensated only by transmission path compensation using the known signal because of fast fluctuation and improve resistance to phase noise without decreasing transmission efficiency.

In this embodiment, although the sign of the Q component is inverted every other chip, it is possible to obtain the same advantage by inverting the sign of the I component every other chip.

### (Embodiment 3)

Features of Embodiment 3 of the present invention include, upon spreading of the transmission signal, multiplying only one of the I component and the Q component by a modified spreading code in which half of the bits configuring the spreading code is inverted.

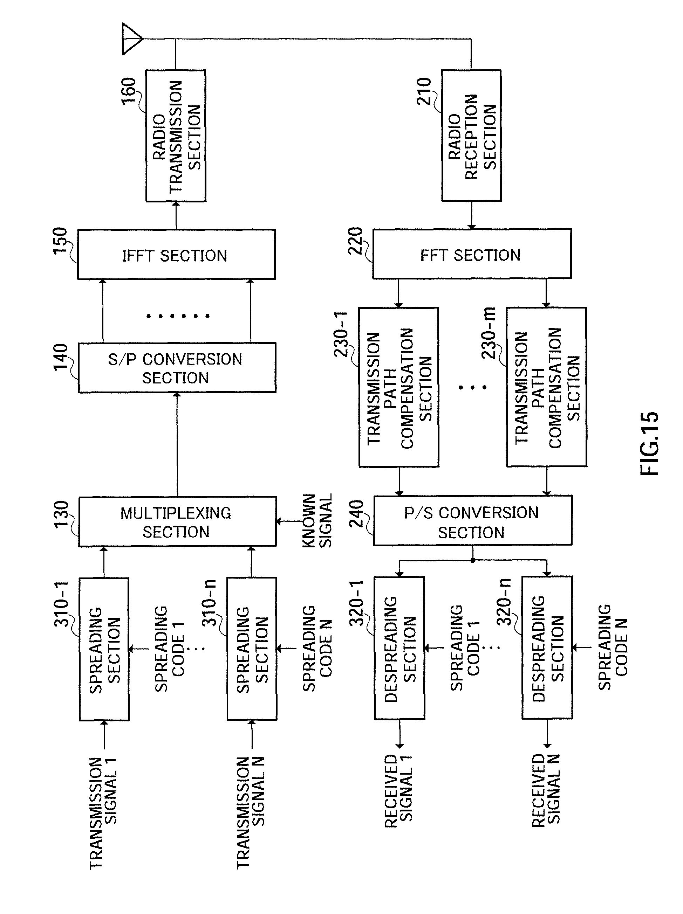

FIG.15 is a block diagram showing the configuration of the CDMA communication apparatus according to Embodiment 3 of the present invention. In FIG.15, parts that are the same as ones in FIG.2 will be assigned the same reference numerals without further explanations. The CDMA communication apparatus shown in FIG.15 has spreading sections 310-1 through 310-n and despreading sections 320-1 through 320-n instead of spreading sections 110-1 through 110-n and despreading sections 260-1 through 260-n of the CDMA communication apparatus shown in FIG.2 and removes coordinate transformation sections 120-1 through 120-n and coordinate transformation sections 250-1 through 250-n.

Spreading sections 310-1 through 310-n spread the I component of transmission signals 1-n using spreading codes 1-n. More specifically, spreading sections 310-1 through 310-n invert signs of half of the bits of spreading codes 1-n and spread the Q component of transmission signals 1-n using the obtained modified spreading codes 1-n.

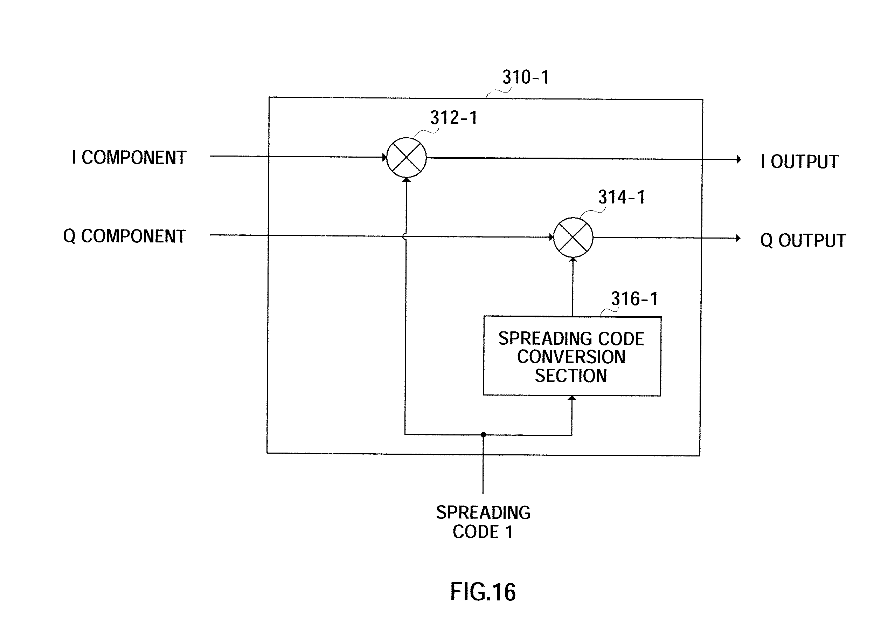

FIG.16 shows an internal configuration of spreading section 310-1. As shown in FIG.16, spreading section 310-1 includes multiplier 312-1,multiplier 314-1 and spreading code conversion section 316-1. Spreading sections 310-2 through 310-n have the same configurations.

Multiplier 312-1 performs spreading by multiplying the I component of transmission signal 1 by spreading code 1, and outputs the spread I component as the I output.

Multiplier 314-1 performs spreading by multiplying the Q component of transmission signal 1 by modified spreading code 1 obtained by transforming spreading code 1 and outputs the spread Q component as the Q output.

Spreading code conversion section 316-1 inverts signs of half of the bits of spreading code 1 and generates modified spreading code 1. Spreading code conversion section 316-1 inverts the signs of the second and fourth bits if, for example, the spreading code is (1, 1, -1, -1), and outputs (1, -1, -1, 1) to multiplier 314-1.

Now, back to FIG.15. Despreading sections 320-1 through 320-n despread the I component of the serial signals outputted from P/S conversion section 240 using spreading codes 1-n. Despreading sections 320-1 through 320-n invert the signs of half of the bits of spreading codes 1-n and despread the Q component of the serial signals by the obtained modified spreading codes 1-n. Despreading sections 320-1 through 320-n have the same configurations to spreading sections 310-1 and use the same modified spreading codes as corresponding spreading sections 310-1 through 310-n in despreading of the Q component.

In Embodiment 3 of the present invention, unlike Embodiments 1 and 2, the spread signal is not subjected to coordinate transformation on the IQ plane. However, by inverting the sign of half of the bits of spreading codes for spreading the Q component of the transmission signals, the signals outputted from spreading sections 310-1 through 310-n become the same as the signals outputted from coordinate transformation sections 120-1 through 120-n of Embodiment 2.

For example, in Embodiment 2, when spreading code 1 is (1, 1, -1, -1), a symbol (x, y) is subjected to coordinate transformation to four chips of (x, y), (x, -y), (-x, -y) and (-x, y) shown in FIGs . 12A through 12D. In this embodiment, the chips inputted to multiplexing section 130 become the same as in Embodiment 2.

In this embodiment, as described above, the I component of the symbol (x, y) is multiplied by spreading code 1 = (1, 1, -1, -1), and thereby (x, x, -x, -x) can be obtained. On the other hand, the Q component of the symbol (x, y) is multiplied by modified spreading code 1 = (1, -1, -1, 1), and thereby (y, -y, -y, y) can be obtained. Accordingly, the four chips outputted from spreading sections 310-1 through 310-n are the same (x, y), (x, -y), (-x, -y) and (-x, y) as in Embodiment 2.

The subsequent operation is the same as in Embodiment 2. The phase noise is commonly added to the chips. Despreading sections 320-1 through 320-n perform despreading using the same spreading codes and modified spreading codes as in the corresponding spreading sections 310-1 through 310-n, so that phase noise for each symbol is canceled out and eliminated. The known signal is not used for compensation of the phase fluctuation due to phase noise, so that the transmission efficiency does not decrease. Further, the impacts of phase noise are also eliminated, so that it is not necessary to provide a high-performance synthesizer in radio transmission section 160 and radio reception section 210, and it is therefore possible to reduce the costs of the apparatus.

As described above, it is not necessary to provide a new coordinate transformation section to the CDMA communication apparatus according to Embodiment 3 of the present invention, and the spreading codes are only partially converted, so that it is possible to further suppress an increase in circuit scale. According to this embodiment, it is possible to eliminate impacts of phase noise effectively with a small circuit scale.

According to Embodiment 3 of the present invention, the transmission side spreads the I component of the transmission signal using the spreading code as is and spreads the Q component of the transmission signal using the modified spreading code obtained by inverting the sign of half of the bits of the spreading code. The receiving side performs despreading using the same spreading code and modified spreading code as the transmission side, so that the phase fluctuation due to phase noise occurring upon the frequency conversion is canceled out, and it is possible to eliminate impacts of phase noise that cannot be compensated only by transmission path compensation using the known signal because of fast fluctuation and improve resistance to phase noise without decreasing transmission efficiency.

In this embodiment, only the Q component is multiplied by the modified spreading code in which the sign of half of the bits is inverted, but it is possible to obtain the same advantage by multiplying only the I component by the modified spreading code.

In the above-described embodiments, the advantage of the synthesizer to phase noise has been described, but it is obvious that the present invention has an advantage for phase fluctuation common to all subcarriers as well as phase noise. For example, carrier frequency errors of the OFDM signal due to the frequency difference between a synthesizer of the transmission apparatus and a synthesizer of the reception apparatus are added as the amount of phase rotation common to all subcarriers, so that the present invention can suppress the errors.

### (Embodiment 4)

Features of Embodiment 4 of the present invention include exchanging the I component and the Q component of the transmission signal spread in the time axis direction for each chip.

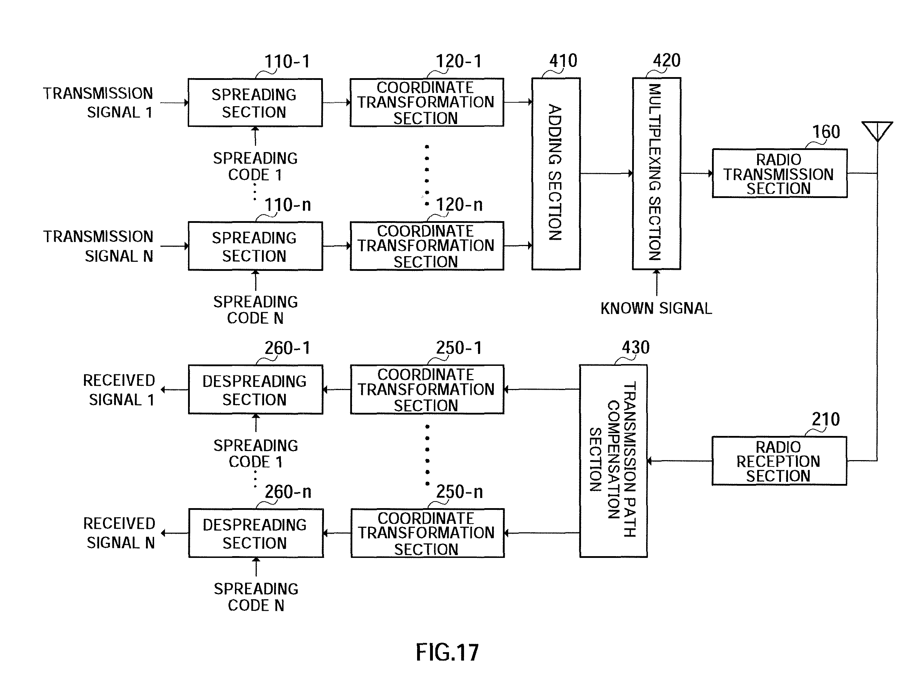

FIG.17 is a block diagram showing a configuration of the CDMA communication apparatus according to Embodiment 4 of the present invention. In this figure, the parts that are the same as ones in FIG. 2 will be assigned the same reference numerals without further explanations. The internal configuration of coordinate transformation section 120-1 of this Embodiment is the same as that of Embodiment 1 as shown in FIG.3 and includes switch 122-1 and switch 124-1. Accordingly, coordinate transformation section 120-1 of this Embodiment outputs a signal made up of the I output and the Q output wherein the I component and the Q component are exchanged for each chip. Coordinate transformation sections 120-2 through 120-n output a signal made up of the I output and the Q output wherein the I component and the Q component are exchanged for each chip.

Adding section 410 performs code multiplexing on n coordinate transformed signals outputted from coordinate transformation sections 120-1 through 120-n and performs addition.

Multiplexing section 420 time division multiplexes the known signal on the signal obtained by code multiplexing n signals on a frame basis.

Transmission path compensation section 430 performs transmission path compensation using the known signal wherein the received signal is subjected to time division multiplexing on a frame basis.

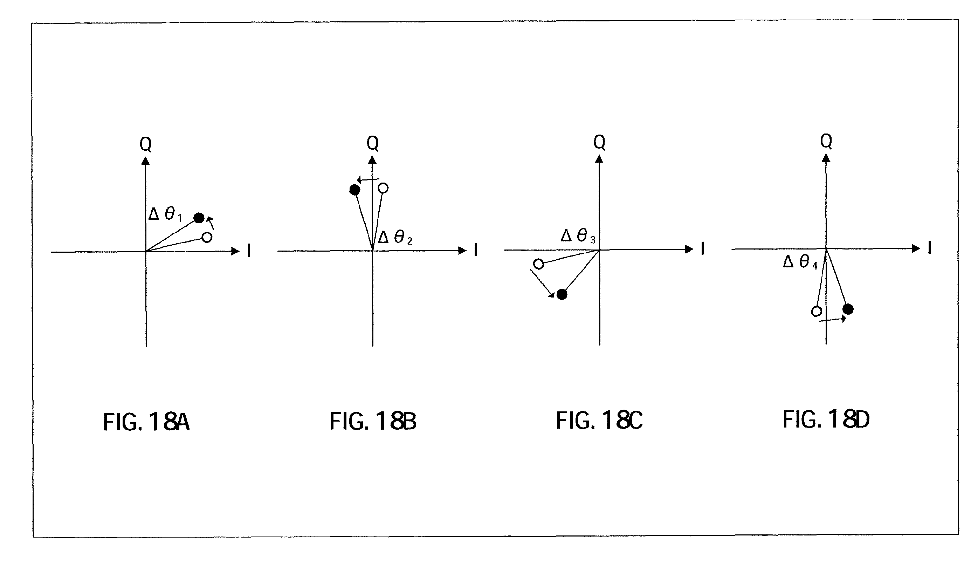

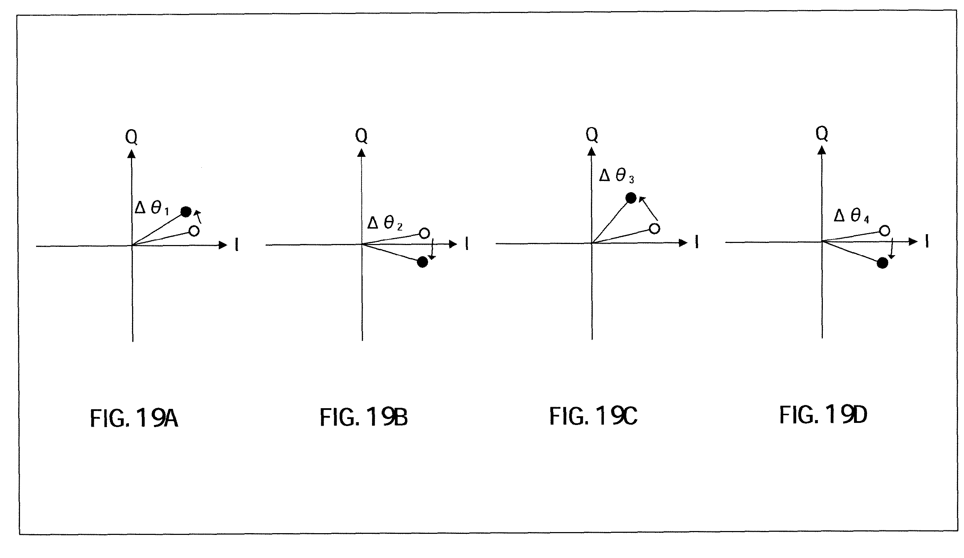

Next, the operation of the CDMA communication apparatus as configured above will be described in detail with reference to FIGs.18 and 19. In the following explanation, the number of code division multiplexing is 1 (that is, n=1), the spreading factor is 4, and spreading code 1 is (1, 1, -1, -1). The symbol (x, y) of transmission signal 1 according to Embodiment 4 of the present invention is located at a coordinate position on the IQ plane shown in FIG.4 in the same way as in Embodiment 1. Spreading section 110-1 multiplies this symbol (x, y) by spreading code 1 and performs spreading. As described above, spreading code 1 = (1, 1, -1, -1). Therefore, the symbol (x, y) is spread into four chips of chip 1 (x, y), chip 2 (x, y), chip 3 (-x, -y) and chip 4 (-x, -y) in the same way as in Embodiment 1.

Coordinate transformation section 120-1 performs coordinate transformation on these four chips. The internal configuration of coordinate transformation section 120-1 according to Embodiment 4 is the same as that of Embodiment 1 as shown in FIG.3. Therefore, as shown in FIGs . 5A through 5D, the chips are subjected to coordinate transformation to (x, y), (y, x) (-x, -y) and (-y, x).

Although adding section 410 code multiplexes these coordinate transformed chips on the coordinate transformed chips spread using another spreading codes 2-n, since n=1, the four chips are outputted to multiplexing section 420 in time series. Multiplexing section 420 time division multiplexes the known signal on the chips arranged in time series on a per frame basis. Radio transmission section 160 performs radio transmission processing on the frame signal formed by time division multiplexing the known signal and transmits the result via the antenna.

In Embodiment 1, spreading in the frequency axis direction is performed, and therefore chips 1-4 are superimposed on different subcarriers after coordinate transformation and subjected to radio transmission processing at the same time. In this Embodiment, spreading in the time axis direction is performed, and therefore chips 1-4 are subjected to radio transmission processing in time series after coordinate transformation.

Accordingly, phase noise added to chips 1-4 upon frequency conversion at radio transmission section 160 is not completely the same, but phase noise which is a little different depending on the time fluctuation is added to the chips.

Similarly, when radio reception section 210 receives the transmitted signal via the antenna at the CDMA communication apparatus on the receiving side, chips are subj ected to radio reception processing in time series, so that phase noise which is a little different depending on the time fluctuation is added to the chips.

Transmission path compensation section 430 performs transmission path compensation on the received signal made up of chips to which phase noise that is a little different between the transmission side and the receiving side is added, using the known signal multiplexed on a frame basis. The signal after transmission path compensation is inputted to coordinate transformation section 250-1.

At this time, unlike Embodiment 1, coordinate-transformed chips shown in FIGs.5A through 5D are inputted to coordinate transformation section 250-1 in a state shifted to filled circle positions shown in FIGs. 18A through 18D. This is because, as a result of phase noise of frequency conversion at radio transmission section 160 and radio reception section 210 being added, a carrier phase fluctuates by Δθ1 to Δθ4 for each chip.

Coordinate transformation section 250-1 transforms the coordinates of filled circles shown in FIGs . 18A through 18D so as to restore the original state before the coordinate transformation of coordinate transformation section 120-1. More specifically, a filled circle shown in FIG.18A is outputted as is. A filled circle shown in FIG.18B is outputted with the I component exchanged with the Q component . A filled circle shown in FIG. 18C is outputted as is . A filled circle shown in FIG.18D is outputted with the I component exchanged with the Q component.

As described in Embodiment 1, coordinate transformation section 250-1 has the same configuration to coordinate transformation section 120-1, and implements the coordinate transformation by the switch that switches for each chip timing.

Despreading section 260-1 multiplies the four chips after coordinate transformation by spreading code 1 (1, 1, -1, -1) and performs despreading. More specifically, the chips move to the positions of the filled circles shown in FIGs.19A through 19D, added, and outputted as received signal 1.

It is worth noting that coordinate transformation of exchanging the I component and the Q component every other chip is performed, so that, when the amount of phase fluctuation shown in FIGs. 19A through 19D is added, phase fluctuation of adjacent chips cancels out each other, and the total amount decreases. That is, in FIGs.19A through 19D, although open circles move to the positions of the filled circles by phase fluctuation by Δθ1 through Δθ4 due to phase noise, coordinate transformation is performed before phase noise is added, and therefore the directions of phase fluctuation due to phase noise are opposite between chips 1 and 3 corresponding to FIGs. 19A and 19C and chips 2 and 4 corresponding to FIGs . 19B and 19D, so that the phase fluctuation cancels out each other.

Asdescribedabove, inthis embodiment, spreading in the time axis direction is performed, and chips 1-4 are transmitted and received in time series, so that, unlike Embodiment 1, the amount of phase fluctuation of chips 1-4 is not always equal. Accordingly, phase fluctuation of chips 1-4 is not completely canceled out, but are reduced by each other.

In general, the time fluctuation of phase noise is large in a time order of a symbol period, but negligibly small in a time order of a chip period in which a symbol is spread in the time axis direction. Even if the components configuring phase noise includes components that fluctuate significantly in the time order of the chip period, such components are by no means dominant and can be ignored. In other words, the major component of phase noise shows gradual time fluctuation in the time order of the chip period. Accordingly, in the case of performing spreading in the time axis direction as in this embodiment, it is possible to cancel out the most of the phase fluctuation by coordinate transformation.

Therefore, received signal 1 outputted from despreading section 260-1 is the signal in which the phase fluctuation due to phase noise that cannot be compensated by transmission path compensation section 430 is compensated. The known signal is not used for compensation of the phase fluctuation due to phase noise, so that the transmission efficiency does not decrease. Further, the impacts of phase noise are eliminated, so that it is not necessary to provide a high-performance synthesizer at radio transmission section 160 and radio reception section 210, and it is possible to reduce the costs of the apparatus.

As described above, coordinate transformation sections 120-1 through 120-n and coordinate transformation sections 250-1 through 250-n according to this embodiment perform coordinate transformation with a simple configuration using a switch, so that the circuit scale does not substantially increase due to coordinate transformation. In other words, according to this embodiment, it is possible to eliminate the impacts of phase noise effectively with a small circuit scale.

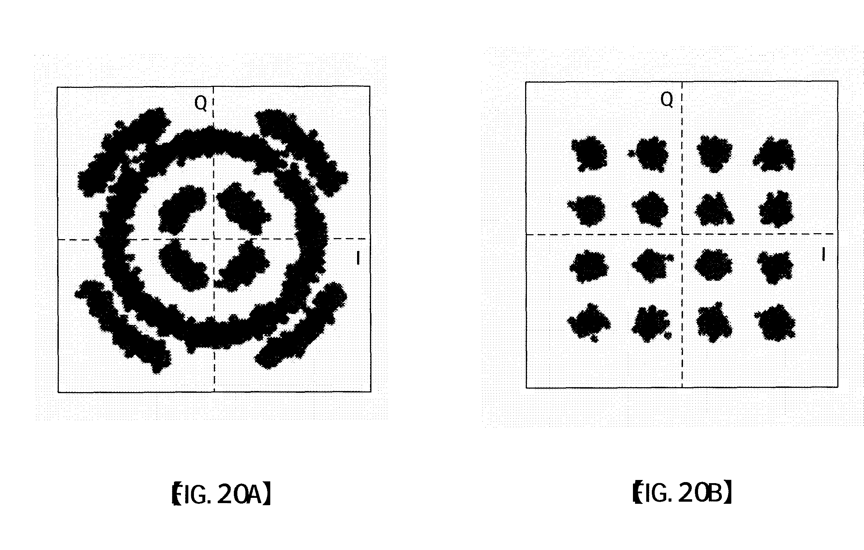

FIG.20A shows an example of the constellation of the received signal for the case of not performing coordinate transformation. FIG.20B shows an example of the constellation of the received signal for the case of performing coordinate transformation according to Embodiment 4 of the present invention. In these figures, the number of code division multiplexing is 4, the spreading factor is 8, the modulation format is 16QAM (Quadrature Amplitude Modulation), the chip rate is 10 MHz, and the signal/noise (S/N) ratio of the modulation signal is 20 dB. Further, as the phase fluctuation due to phase noise, sine wave fluctuation in which the amount of rotation is plus minus 20 degrees at frequency of 2 kHz is added.

As is obvious from the comparison of these figures, in FIG.20A where coordinate transformation is not performed, received signal candidate positions are difficult to identify due to the phase fluctuation. On the other hand, in FIG.20B where coordinate transformation is performed, the received signal candidate positions can be clearly identified.

According to Embodiment 4 of the present invention, the transmission side exchanges the I component and the Q component of the spread transmission signal for each chip and transmits the result, and the receiving side restores the original state before exchanging the I component and the Q component and performs despreading, so that the phase fluctuation due to phase noise occurring upon the frequency conversion cancels out, and it is possible to eliminate the impacts of phase noise that cannot be compensated only by transmission path compensation using the known signal because of fast fluctuation, and improve resistance to phase noise without decreasing transmission efficiency.

In this embodiment, the configuration of exchanging the I component and the Q component for each chip has been described, but as in Embodiment 2, with the configuration of inverting only one of the I component and the Q component for each chip, it is possible to compensate the phase fluctuation of the signal spread in the time axis direction.

It is obvious that the present invention has an advantage for various phase fluctuation as well as phase noise of the synthesizer as in Embodiments 1, 2 and 3. For example, the present invention can suppress a carrier frequency error due to the frequency difference between a synthesizer of the transmission apparatus and a synthesizer of the reception apparatus.

In the above-described embodiments, the I component and the Q component are converted every other chip, but the present invention is not limited to this configuration, and it is possible to convert the components every two chips or in random. That is, in conclusion, it is only necessary to convert the chips superimposed on all the subcarriers or half of the chips included in a single frame.

In the above-described embodiments, a single coordinate transformation section is provided for a single spreading code, but it is possible to collectively perform coordinate transformation after code multiplexing the chips corresponding to the spreading codes. In this case, for example, in FIG.17, the order of coordinate transformation section and the adding section may be replaced, the chips spread by spreading sections 110-1 through 110-n may be outputted, and the code-multiplexed chips may be subjected to coordinate transformation at a single coordinate transformation section.

The present application is based on Japanese Patent Application No. 2003-186906, filed on June 30, 2003, and Japanese Patent Application No.2004-172996, filed on June 10, 2004, the entire content of which is expressly incorporated by reference herein.

### Industrial Applicability

The CDMA communication apparatus and CDMA communication method according to the present invention are capable of improving resistance to phase noise without decreasing transmission efficiency, and, in particular, are suitable for use in a CDMA communication apparatus and CDMA communication method adopting an OFDM scheme in which one symbol of chips is superimposed on a plurality of subcarriers and transmitted at the same time.

## Claims

1. A CDMA communication apparatus comprising:
a spreading section that spreads a symbol using a spreading code to obtain a plurality of chips; and
a conversion section that converts at least one of an in-phase component and a quadrature component of half of the plurality of chips corresponding to one symbol.

2. The CDMA communication apparatus according to claim 1, wherein said conversion section exchanges the in-phase component and the quadrature component of the half of the chips.

3. The CDMA communication apparatus according to claim 1, wherein said conversion section inverts a sign of one of the in-phase component and the quadrature component of the half of the chips.

4. The CDMA communication apparatus according to claim 1, wherein:
said spreading section spreads one of the in-phase component and the quadrature component of the symbol using the spreading code to obtain one of the in-phase component and the quadrature component of the plurality of chips; and
said conversion section further comprises:
a spreading code conversion section that inverts the sign of half of bits configuring the spreading code to generate a modified spreading code; and
a multiplier that multiplies one of the in-phase component and the quadrature component which is not spread by said spreading section, by the modified spreading code.

5. The CDMA communication apparatus according to claim 1, wherein said conversion section converts at least one of the in-phase component and the quadrature component every other chip.

6. A CDMA communication apparatus comprising:
a reception section that receives a signal comprising a plurality of chips obtained by spreading a symbol;
a conversion section that converts at least one of an in-phase component and a quadrature component of half of the plurality of chips corresponding to one symbol; and
a despreading section that despreads the plurality of chips corresponding to the symbol using a spreading code.

7. A base station apparatus comprising the CDMA communication apparatus according to claim 1.

8. A base station apparatus comprising the CDMA communication apparatus according to claim 6.

9. A communication terminal apparatus comprising the CDMA communication apparatus according to claim 1.

10. A communication terminal apparatus comprising the CDMA communication apparatus according to claim 6.

11. A CDMA communication method comprising the steps of:
spreading a symbol using a spreading code to obtain a plurality of chips; and
converting at least one of an in-phase component and a quadrature component of half of the plurality of chips corresponding to one symbol.

12. A CDMA communication method comprising the steps of:
receiving a signal comprising a plurality of chips obtained by spreading a symbol;
converting at least one of an in-phase component and a quadrature component of half of the plurality of chips corresponding to one symbol; and
despreading the plurality of chips corresponding to the symbol using a spreading code.
